Europäisches Patentamt

(19) European Patent Office

Office européen des brevets

(11) Publication number: **0 184 188**

A2

(12) **EUROPEAN PATENT APPLICATION**

(21) Application number: 85115324.7

(22) Date of filing: 03.12.85

(51) Int. Cl.⁴: **G 11 B 7/007**
G 11 B 7/09, G 11 B 11/10
//G11B7/125, G11B13/04

(30) Priority: 03.12.84 JP 255315/84
03.12.84 JP 255320/84
03.12.84 JP 255326/84
22.02.85 JP 34746/85
22.02.85 JP 34752/85

(43) Date of publication of application:
11.06.86 Bulletin 86/24

(84) Designated Contracting States:
DE FR NL

(71) Applicant: HITACHI, LTD.
6, Kanda Surugadai 4-chome Chiyoda-ku
Tokyo 100(JP)

(72) Inventor: Tsuboi, Nobuyoshi
2081, Tojuku Ishigami Toukai-mura
Naka-gun Ibaraki-ken(JP)

(72) Inventor: Nihei, Hideki
2-20-1, Mizuki-cho
Hitachi-shi Ibaraki-ken(JP)

(72) Inventor: Shimada, Satoshi
5-7-12, Kanesawa-cho
Hitachi-shi Ibaraki-ken(JP)

(72) Inventor: Sasaki, Hiroshi
2-23-2, Higashiohnuma-cho
Hitachi-shi Ibaraki-ken(JP)

(72) Inventor: Miyamoto, Norifumi
6-20-3, Ayukawa-cho
Hitachi-shi Ibaraki-ken(JP)

(72) Inventor: Sato, Yoshio
1-3-15, Hanayama-cho
Hitachi-shi Ibaraki-ken(JP)

(72) Inventor: Koyanagi, Hiroaki
6-20-3, Ayukawa-cho
Hitachi-shi Ibaraki-ken(JP)

(72) Inventor: Ito, Tetsuo
1498-8, Kasahara-cho
Mito-shi Ibaraki-ken(JP)

(72) Inventor: Hiraga, Ryo
3596, Kanai-cho
Hitachiohta-shi Ibaraki-ken(JP)

(72) Inventor: Watanabe, Atsumi
7-14-4, Kuji-cho
Hitachi-shi Ibaraki-ken(JP)

(74) Representative: Strehl, Schübel-Hopf, Schulz
Widenmayerstrasse 17 Postfach 22 03 45
D-8000 München 22(DE)

(54) Information-recording and reproducing device.

(57) In an information-recording and reproducing device using a recording medium composed of metal or an alloy including at least two kinds of crystalline structures in a solid state, the crystalline structure in one temperature area being maintained in the other temperature area, or that device using a recording medium using a reversible change between crystalloid and non-crystalloid or said device using a recording medium of optical magnetism, it is designed to accomplish stable recording without being influenced by a sensitivity of a recording medium or an output change of a laser beam by means of providing a circuit for flowing a certain amount of driving current through a laser diode, accomplishing record and detecting the recording state.

*FIG. 8*

0184188

TITLE OF THE INVENTION

Information-Recording and Reproducing Device


BACKGROUND OF THE INVENTION

The present invention relates to a new type of information-recording and reproducing device and particularly to the information-recording and reproducing device which serves to record, erase and reproduce information on a recording medium by means of optical energy or heat energy.

Nowadays, various kinds of infromation-recording and reproducing devices are going to be developed in accordance with progress of high-densifying and digitalizing of information-recording. Particularly, an optical disc, which utilizes optical energy of a laser for recording, erasing and reproducing information, can have higher recording density than a magnetic disc and is considered as a leading system of information-recording in the furture. In this kind of system, the reproducing device by means of a laser has been put into practical use as a compact disc(CD). On the other hand, the systems which can realize recording can be grouped into two sections, that is, addition systems and rewritable systems. The former can realize only one-time write and cannot realize erasing. The latter can realize repetitive recording and erasing. The addition system of recording method has a function of destructing and forming a recording part of a medium so as to form convexes and concaves and its reproducing utilizes a change of beam reflection by interference of a laser beam on these convexes and concaves. It is generally known that this recording medium employs Te and its alloy so as to form convexes and concaves thereon by means of smelting and sublimation. The recording medium of the rewritable system mainly employs photo-magnetic materials. This recording medium thereof has a function of realizing recording by inverting local magnetic anisotropy on the medium nearby a Curie point or a compensation point by means of optical energy and of realizing reproducing in accordance with the rotation amount of polarizing surfaces by virtue of a magnetic Faraday effect and a magnetization effect of a polarized incident ray on the part to be recorded. This method has been vigorously developed and researched for aiming at the practical sue in a few years as the most preferable method of the rewritable system. However, at present, it has the problem that the output levels in S/N, C/N and the like are low even by accomplishing various designs such as multilayering of a film and the like, because there is no material with a large amount of rotation of polarizing surfaces. As another method of the rewritable system, for example, as disclosed in Japanese Patent Publication No.47-26897, there exists an invention utilizing a reflectivity change caused by a reversible phase change of crystalloid and non-crystalloid of a recording medium. Further, as a method of the addition system, there is known the system utilizing a phase change in one direction of crystalloid and non-crystalloid. Both of these addition systems and rewritable systems have great problems of lowering the S/N and the C/N levels in recording and reproducing or of damaging a recording film if an  amount of lase beam given in recording is not suitably arranged.

## SUMMARY OF THE INVENTION

It is an object of the present invention to provide an information-recording and reproducing device which provides means for detecting a recording state of a recording medium and serves to stably erase recording content by optimally controlling heat energy given during a recording time or an erasing time, in an optical system of information-recording and reproducing device which eliminates the above-stated defects, records information on a recording medium and reproduces the recorded information.

In an information-recording and reproducing device using a recording medium composed of metal or an alloy including at least two kinds of crystalline structures in a solid state, the crystalline structure in one temperature area being maintained in the other temperature area, or said device using a recording medium having a reversible change between crystalloid and non-crystalloid as described in Japanese Patent Publication No.47-26897, or said device using a recording medium of optical magnetism, the present invention of an information-recording and reproducing device is characterized by accomplishing stable recording without being influenced by sensitivity of a recording medium and an output change of a laser beam by means of providing a circuit for flowing a certain amount of driving current through a laser diode, accomplishing record and detecting the recording state.

## DETAILED DESCRIPTION OF THE DRAWINGS

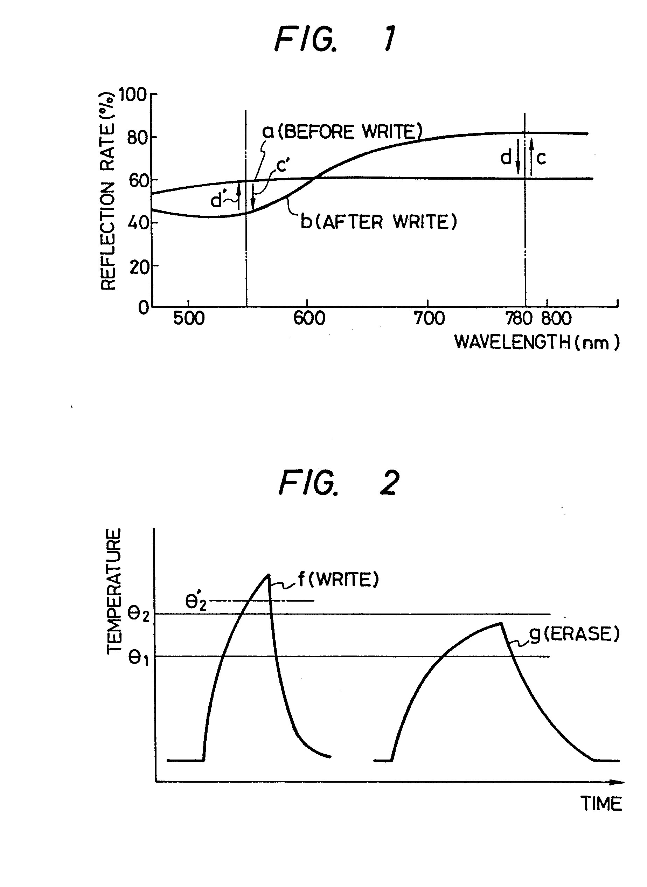

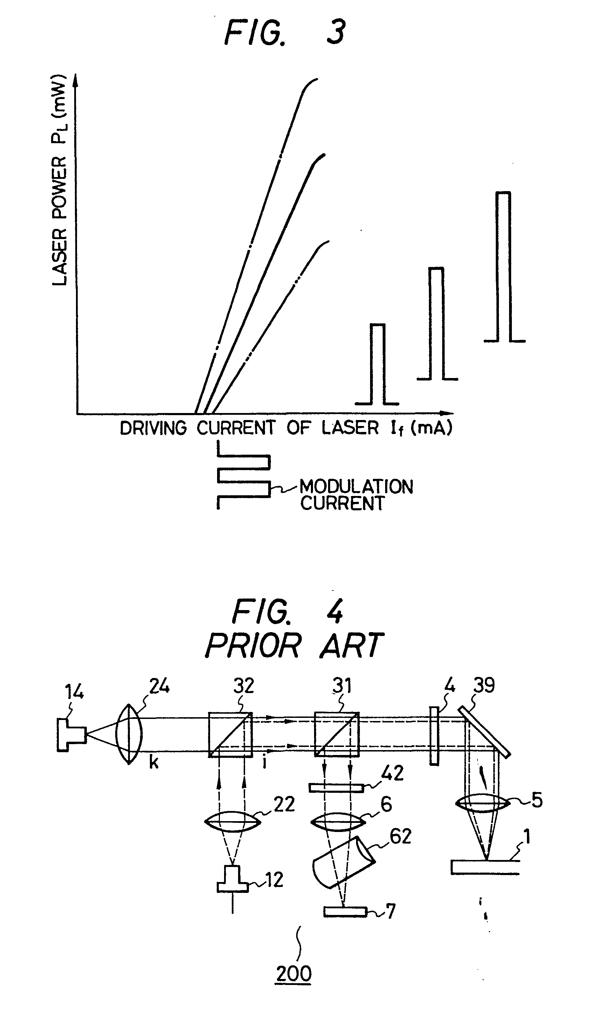

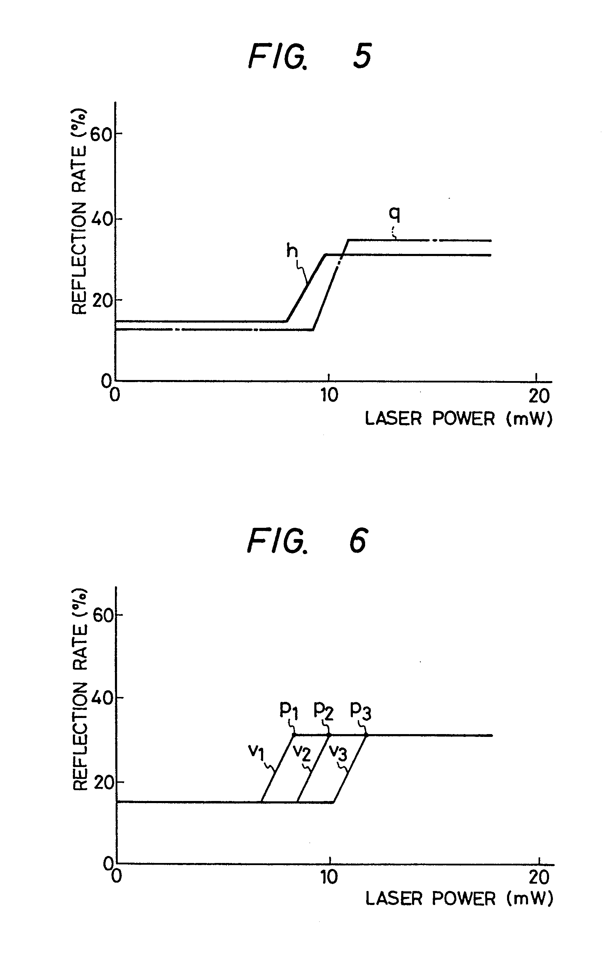

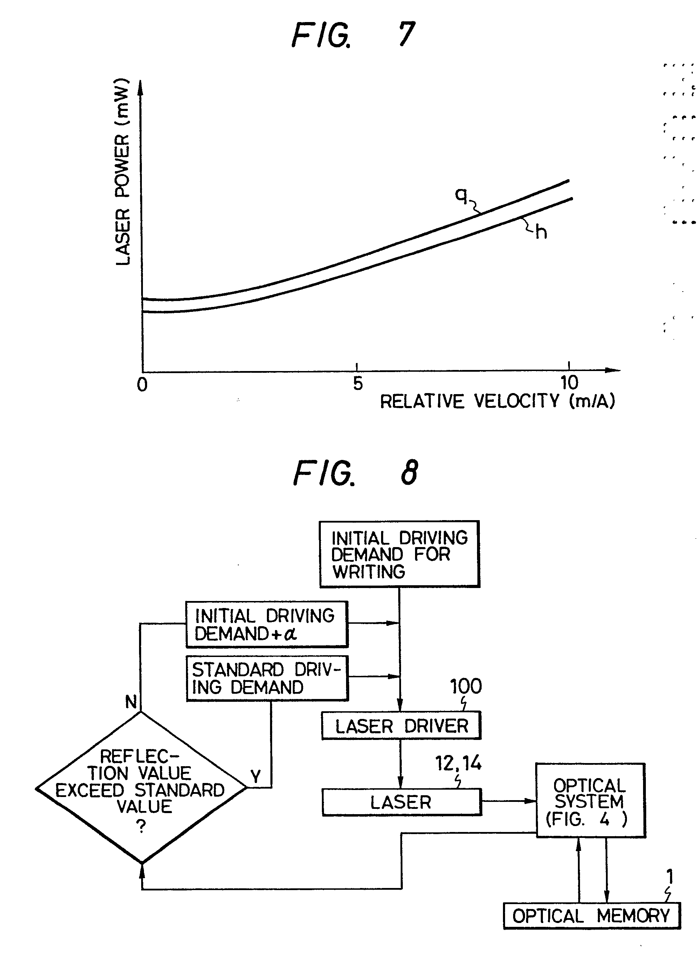

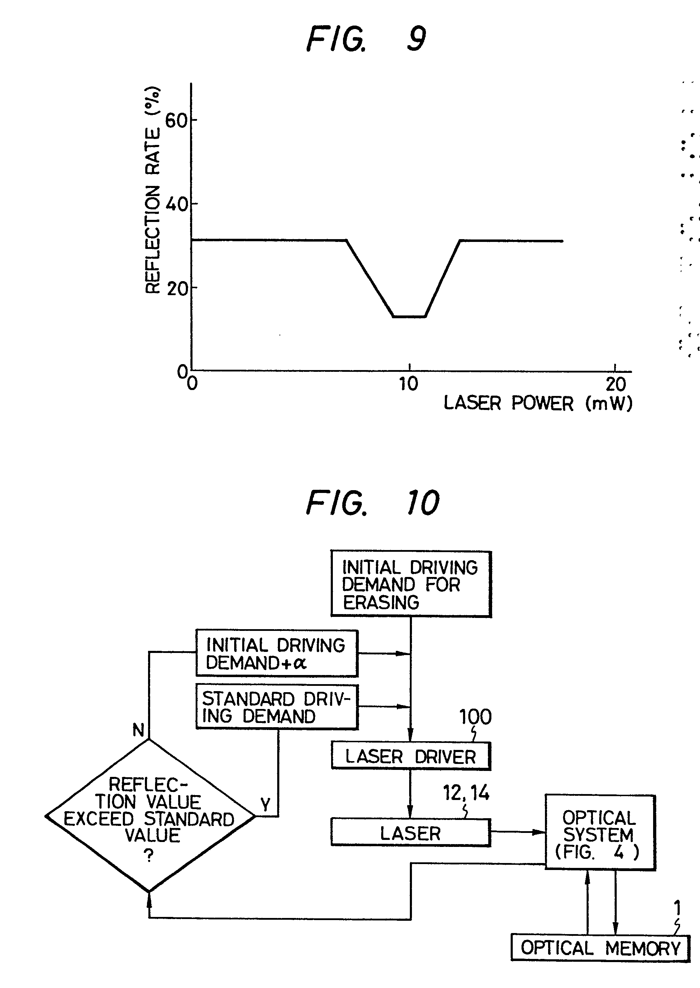

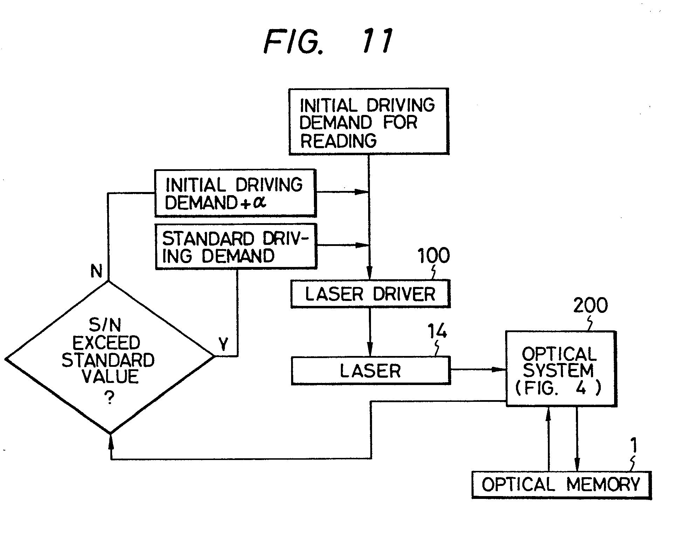

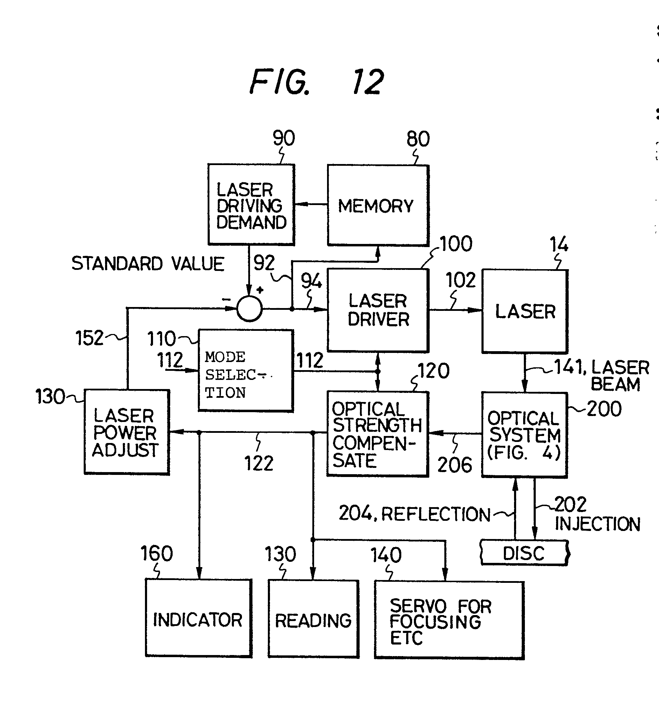

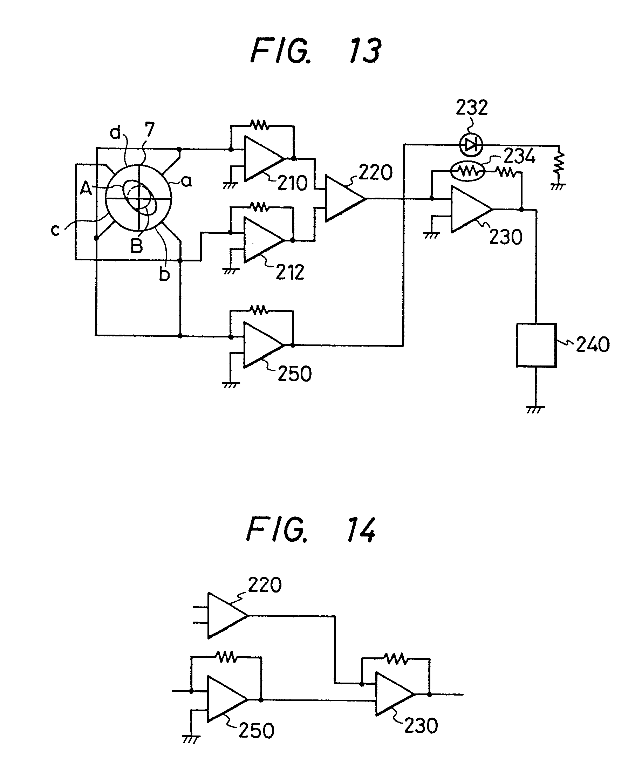

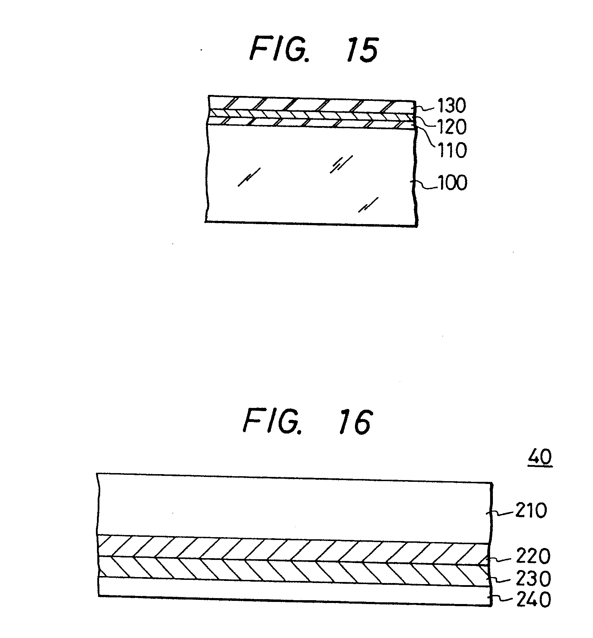

Fig.1 is a graph showing a reflectivity change from the state before recording to that after recording in inter-crystalline phase transition material. Fig.2 is an explanatory view showing a disc surface temperature required for erasing and writing. Fig.3 is a graph showing relation between laser driving current and laser power of a semiconductor laser. Fig.4 is a view showing construction of a conventional optical disc. Fig. 5 is a graph showing a change of laser power of an optical system and reflectivity of a recording medium after radiating laser power. Fig. 6 is a graph showing relation between laser power and reflectivity caused when a relative speed of a beam spot to a recording medium is changed. Fig. 7 is a graph showing relation between a relative speed and laser power. Fig. 8 is a block diagram showing one embodiment of the present invention employed in writing. Fig. 9 is a graph showing relation between laser power and reflectivity in erasing. Figs. 10 and 11 are respectively block diagrams showing one embodiment of the present invention employed in erasing and reading. Fig. 12 is a block diagram showing one embodiment of the present invention. Figs. 13 and 14 are views showing concrete circuit compositions in case of utilizing the present invention for an auto-focusing control system. Fig. 15 is an illustration showing film structure of an inter-crystalline phase transition alloy.

DETAILED DESCRIPTION OF THE PREFERRED EMBODIMENT

Now, as a recording medium for a rewritable system which can be used in the present invention, in addition to the above-stated amorphous system material and photo-magnetic material, there can be provided intercrystalline phase transition material proposed by the present applicant and the like. With regard to the intercrystalline phase transition material, the applications are filed in main countries(for example, Japanese Patent Application Nos.59-42079 and 59-130611). The detailed description will be developed later.

The present inventors and the like made various kinds of experiences with regard to an intercrystalline phase transition alloy of the present invention so as to research a reflectivity change of a beam from the state before recording to the state after recording on the assumption of using it for an optical disc device.

Hereinafter, taking an example of an optical disc device, the present invention will be described, but this invention should not be limited to this example.

Fig.1 shows a typical example of a reflectivity change. In this Figure, a denotes the state before writing. b denotes the state after writing. The optical disc utilizes this characteristic shown in Fig.1, that is, serves to discriminate the presence or the absence of information in accordance with the difference between the reflection amount in case of radiating a beam on the written spot and that in case of radiating a beam on the non-written spot by means of, for example, a light beam whose wavelength is 780 nm. As clearly shown in this Figure, in writing, the reflectivity is made larger as shown in c and, in erasing, it is made smaller as shown in d. Further, in case of selecting a light beam with 550 nm of wavelength, in writing, the reflectivity is made smaller as shown in c' and, in erasing, it is made larger as shown in d'.

In order to write or erase information on this intercrystalline phase transition alloy, it is necessary to heat it up to the temperature shown in Fig.2. Namely, in writing, it is necessary to heat an optical disc over a temperature $\theta_2$ as shown in a curve f and then swiftly cool it down. In erasing, it is necessary to apply a sufficient amount of energy to an optical disc in the state from a temperature $\theta_1$ to the temperature $\theta_2$ as shown in a curve g. The phenomenon described in Figs. 1 and 2 can be applied to the case of utilizing another material.

The optical disc usually has thin multilayer film composition for the purpose of absorbing heat, sustaining interference by a light beam and the like. Thus, it is better not to heat it over the required temperature for prevention of deforming it. Hence, it is necessary to control optical power so as to heat it up to $\theta_2'$ which is a little higher than $\theta_2$.

On the other hand, considering the case of erasing, nowadays, the most compact and cheapest semiconductor laser has 800 nm or some of wavelength. In this wavelength band, upon completion of erasing, reflectivity is made lower as shown in Fig.1(absorptivity is made larger). Accordingly, there is brought about the problem that the continuation of the same optical power serves to promote heating and then the temperature of an optical disc is made higher than the lowest temperature $\theta_2$ for writing and thus rewriting is caused.

It is possible to prevent this phenomenon by the way the optical power for erasing is much smaller for the purpose of lengthening the time when an optical disc attains up to the temperature $\theta_1$ and during the time the optical power is weakened. However, as a result, the rapid erasing cannot be accomplished.

These temperatures $\theta_2$ and $\theta_1$ for writing and erasing are respectively determined in accordance with material composition and film structure of an optical disc as stated before. Further, as shown in Fig.2, the optical power of a semiconductor laser is ordinarily variable in each case even if the same driving current is given to the same type of laser. Hence, in case of writing or erasing by using a rewritable type of optical disc, it is necessary to control the optical power as detecting a beam reflection level so as to supply an optical disc with required and sufficient optical power.

At first, the construction of a conventional optical disc device is described with reference to Fig.4.

In Fig.4, the diverged beams outputted from semiconductor lasers 12 and 14 is made to be parallel beams i and k through collimate lenses 22 and 24. Herein, providing 12 denotes a semiconductor laser for writing and reading and 14 denotes a semiconductor laser for erasing, the parallel beam i changes its direction about 90 degrees through a light-synthesizer 32 and passes through an approximately central part of a polarization beam splitter 31, a $\lambda$/4-plate 4, a mirror 39 and an objective 5 so as to form an approximately circular spot at the center of a writing line of a disc 1.

The beam reflected by the disc 1 passes through the objective 5, the mirror 39 and the $\lambda$/4-plate 4 to the polarization beam splitter 31 in which its direction is changed. Then, the beam passes through a coupling lens 6 and a cylindrical lens 62 so as to attain to an optical detector 7. In accordance with the state of image formation in this optical detector 7, it is possible to obtain the control of distance between the objective 5 and the disc 1, that is, the control of focusing and tracking direction of the disc, that is, a servo signal for tracking. Various systems have been proposed for obtaining it and are well-known. Thus, it is not necessary to describe it here. Prevention of entering disturbance light into the optical detector is accomplished by providing a filter 42 for screening the reflected beam caused by the beam k for erasing in this detecting system.

Next, Fig.3 is a graph showing the relation between laser driving current and laser power of a semiconductor laser. In this Figure, the modulation laser power consisting of a square wave is shown. As shown in this Figure, the laser power is usually variable in each case even if the same driving current is supplied to the same type of laser. Thus, it is necessary to supply different driving current for obtaining the same power and besides there needs somewhat long time for obtaining a stable output even if the same laser is utilized because of the temperature the like.

Furthermore, the sensitivity of each optical disc is not identified with one another. Thus, in each medium, the intensity of laser-spotting for writing and erasing is variable and each reflectivity in the writing and the non-writing parts is different from each other. Accordingly, it is necessary to swiftly arrange the intensity of laser-spotting for reading required in reproducing.

Fig. 5 shows changes of laser power in case of radiating a spot beam on an optical disc by using an optical system shown in Fig. 4 and reflectivity of the optical disc after the radiation. Herein, k and g means there are two optical discs. In k, it has 15% of reflectivity in a non-writing state, but its reflectivity is changed to 30% by giving an intense spot beam sufficing for writing.

In this case, the laser power attaining to 30% of reflectivity is 10 mW. In g, it has reflectivity in a non-writing state which is lower than k, but it has reflectivity after writing which higher than k. This kind of optical disc has a high S/N ratio, but has a problem that the difference of absorptivity of a laser beam radiated in erasing is made larger.

Fig. 6 shows a relative speed of a spot beam to the optical disc k, that is, a change of reflectivity to laser power in case of changing a line speed of the optical disc. When the line speed is gradually heightened as $V_1$, $V_2$ and $V_3$, the laser power given when reflectivity is saturated is increased as $P_1$, $P_2$ and $P_3$.

Fig. 7 is a summary of laser power to the relative speed (line speed) obtained as described in Fig. 6. Namely, it represents the laser power required for changing reflectivity of an optical disc against a line speed. Similarily, this Figure shows the case of g and thus it is to be understood that in each disc, the required laser power is variable. The laser power shown in Fig. 6 is required and sufficient, because the supply of excessive spotting of a laser beam to an optical disc serves to break a thin film so as to have a different value of reflectivity from a recorded value as stated before and the erasing can be made impossible as stated after.

Accordingly, it is understood that in case the optical disc and the line speed are clearly grasped, the range of laser power should be defined. However, as shown in Fig. 3, the characteristics of driving current and laser power are variable in each laser. Hence, as shown in Fig. 8, the present invention has a function of supplying laser driving current with suitable initial modulation current, detecting a reflectivity change of an optical disc by the laser power outputted by said current, increasing the modulation current in case of not saturating a reflectivity change, obtaining said required and sufficient laser power and grasping the laser driving current at that time of this laser power. This modulation current required for obtaining this laser driving current is referred as to a driving demand for writing. As stated before, the level of this driving demand for writing should be obtained and stored. By this storage, an optical disc, a line speed and an optical system can obtain the lase output required for accomplishing suitable writing at a predetermined time. Usually, it is possible to set the level of this driving demand.for writing. Of course, in case of changing characteristics of a laser, an optical disc and the like, it is necessary to modify this level.

Fig.9 shows the relation between laser power and reflectivity of an optical disc given when a spot beam is radiated on a written part of the optical disc by using an optical system for the purpose of erasing it.

The reflected beam is computed into reflectivity by radiating a laser beam for reading reflectivity after radiating a spot beam for erasing. When the laser power for erasing is small, the reflectivity shows 30% of reflectivity in the written state. In case of radiating suitable laser power, the reflectivity is made lower and in case of the most suitabel laser power, the reflectivity has 15% of the reflectivity in the non-writing state, which means the information is erased.

Further, as the laser power is ra  ed, the reflectivity starts to rise and in case of supplying lase power over a certain value, the reflectivity attains to 30% of the reflectivity in the written state. It means a saturation tendency. This is why, as shown in Fig.2, the laser power

is made larger as to go beyond $\theta_1$ and the erasing is realized in the range of lower than $\theta_2$. When the laser power is further made larger to go beyond $\theta_2$, the writing can be realized. Accordingly, in case an optical disc and a line speed are clearly grasped, it is possible to accomplish erasing in case of selecting the range of laser power, but similarily with the case of writing, this case of erasing is designed to obtain modulation current required for erasing, referred as to a driving demand for erasing as shown in Fig. 10 and further to obtain and store the level of this driving demand for erasing as stated before.

By this design, it is possible to obtain laser power for accomplishing suitable erasing when an optical disc, a line speed and an optical system are defined and ordinarily to set the level of this driving demand for erasing. It is natural that this level should be required to be modified in case of changing laser characteristics, an optical disc and the other conditions.

Next, in case of reading out the information written in an optical disc, it is necessary to radiate a laser beam for reading and to suitably arrange the level of a reflected beam. Accordingly, as shown in Fig.11, this case is also designed to obtain the level of a driving demand for erasing and to store it.

By this design, it is possible to obtain laser power for accomplishing suitable reading when an optical disc and an optical system are defined and to ordinarily set the level of this driving demand for reading. It is natural that this level should be required to be modified in case of changing laser characteristics, an optical disc and the other conditions.

Fig.12 is a block diagram showing circuit arrangement of one embodiment of the present invention. A laser driving circuit 100 serves to drive a laser 14 which radiates a laser beam to an optical system 200. The laser driving circuit 100 serves to set respective driving levels by means of a signal 112 caused by the mode switching by a writing, erasing and reading mode-setting circuit 110. As a result, the laser beam 141 is set so as to have the intensity in accordance with each level and is suitably shaped in the optical system 200 and then serves to form a minute spot on an optical disc 1. In writing, a write signal 112 is inputted to the laser driving circuit 100 via the mode-setting circuit 110 and a spot for writing is written on an optical disc 1 in accordance with the write signal. The reflected beam 204 sent from the optical disc 1 is detected by the optical detector 7 in the optical system 200, where the reflected beam is changed to a reflection intensity

0184188

signal 206. An optical intensity-compensating circuit 120 serves to accomplish compensation of intensity in accordance with each mode of writing, erasing and reading and then to output a compensated reflected beam intensity signal 122. This compensated reflected beam intensity signal 122 is inputted in a laser power adjusting circuit 150 which serves to output an adjusted value 152 in accordance with the compensated reflected beam intensity signal 122. In accordance with the compensation between this adjusted value and a standard value 92 of laser power sent from a laser driving demand circuit 90, a demand value 94 sent to the laser driving circuit 100 is increased or decreased. Hence, in case the adjusted value 152 does not attain to the standard value 92, the cause is that lowering of intensity of the laser beam 141 in relation to the laser driving signal 102 is brought about by deteriorating the laser 14 or the .reflected beam 204 is made lower in relation to the beam 202 by lowering reflectivity of the optical disc 1. Thus, the demand value 94 should have a positive value and the laser driving signal 102 also should be increased. In case the adjusted value 152 is larger than the standard value 92, since this is the reverse case, the demand value should have a positive value and the laser driving signal 102 should be also decreased. Consequently,

0184188

the intensity of the laser beam 141 is controlled so as
to always make the standard value 92 coincide with the
adjusted value 152 and thus the stable writing, erasing
and reading are carried out.

Furthermore, said compensated reflected beam
intensity signal 122 is not only utilized for compensating
laser power as stated above but also inputted to a signal-
reading circuit 130 for reading a recording signal and
-controlling circuit 140 for focusing, tracking
and the like.

Moreover, since said standard value 92 of laser
power has a suitable value in relation to each optical
disc, it is necessary tó reset said standard value 92
every time the optical disc used for the present device
is changed.  Thus, in accordance with the method shown in
Figs. 8, 10 and 11, the standard value in each disc should
be obtained.  And then it is necessary to provide a memory
80 for storing the standard value of each optical disc
1.  When a new optical disc is loaded, the standard value
92 should be suitably set or newly obtained as stated
above.  Further, it is possible to set a standard value
in accordance with the newest state of each optical
disc by storing the demand value 94 in the memory 80 as
a new standard value of the recording medium when the
optical disc is taken out of this device.

By this way, irrespective of accomplishing writing and reading at a suitable level as stated above, there is a case that a reading signal is not within a standard level. In this case, it is considered that the writing content is made inferior by same cause. This inferiority can be easily discriminated by an output 122 of the optical intensity compensating circuit 120. Thus, when this output level goes out of a certain range, there is accomplished an indication 160 for indicating an inferior state. By this indication, it is possible to normalize write content by rewriting the write content if required.

Fig. 13 is a block diagram of a focusing-control circuit showing one embodiment of the present invention. The optical detector 7 is divided into four parts a, b, c and d. The detecting outputs of a and b are inputted to a first amplifier 210 and the detecting outputs of c and d are inputted to a second amplifier 212 and further a focusing-amplifier 220 serves to take difference of outputs between the first amplifier 210 and the second amplifier 212. The output of the focusing amplifier 220 is amplified via an actuator-driving amplifier 230 and then is inputted to an actuator 240 so as to drive the actuator 240 (in the embodiment, the actuator for focusing). The form of a reflected beam

- 19 -

0184188

formed on the output detector 7 is made circular as shown in a dotted line B in case of focusing. Each of 4-divided detectors a, b, c and d has the same outputs with one another and thus the output of the focusing-amplifier 220 is made zero. As a result, the actuator 240 is not made driven. In case of un-focusing, the form of a reflected beam formed on the detector 7 is made ellipsoidal as shown in a read line A. The outputs of 4-divided detectors c and d are made increased and the outputs of a and b are made decreased. Thus, the output of the focusing-amplifier 220 is increased in the direction(polarity) of driving the actuator 240 toward the focusing. As a result, the actuator 240 is made driven. This driving is automatically accomplished until the form of a reflected beam in the detector 7 is made to be the form in case of focusing as shown in B. It means, what is called, auto-focusing control. In addition to the above-stated arrangement, the present embodiment is arranged to obtain a sum of the outputs of 4-divided detectors 7, to amplify it in a reflected-beam amplifier 250, to apply the output of the reflected-beam amplifier 250 to a photodiode 232 and to provide a photoconductive element 234 functioned as feedback resistance of the actuator-driving amplifier 230 in relation to the photodiode 232. By taking this arrangement, in accordance

- 20 -

0184188

with intensity of the reflected beam formed on the detector 7, the luminescence intensity of the photodiode 232 is made variable. Thus, the resistance of the photoconductive element 234 functioned as the feedback resistance of the actuator-driving amplifier 230 is made variable. As a result, a gain of the actuator-driving amplifier 230 is changed in accordance with intensity of a reflected beam on the detector 7. Accordingly, in case of generally diminishing a reflected beam by means of deterioration of a laser or increasing or decreasing reflected beam intensity by changing the quality of an optical disc, the gain of the actuator-driving amplifier 230 is automatically arranged in accordance with a change of the reflected beam intensity and thus it is possible to minutely and stably accomplish the focusing-control without being influenced by the reflected beam intensity.

Further, the present embodiment employs the arrangement of changing a gain of the focusing-amplifier by the output of the reflected-beam amplifier, but it is possible to realize the same function with the above by taking a difference between the output of the reflected-beam amplifier and the output of the focusing-amplifier as shown in Fig.14.

In a circuit for controlling an actuator by a reflected beam such as a tracking-control circuit, a jitter control circuit or the like, it is possible to accomplish compensation of actuator-control in accordance with an intensity change of a reflected beam by means of the same arrangement with the above and to realize stable control without being influenced by an intensity change of a reflected beam.

Lastly, of said optical discs, a new optical disc having a reflectivity change by intercrystalline transition is described in relation to the alloy composition, the nonbulk composition and its manufacturing method, the structure and the use.

(Alloy composition)

This intercrystalline phase transition alloy is disclosed in detail in the patent application Nos. 59-42079 and 59-130611 with regard to the previous application of the present applicant. It has crystalline structure which has two different aspects in a high temperature state and in a low temperature state. The crystalline structure is formed by quenching it from the high temperature state.

Moreover, this phase formed by quenching is changed to be the crystalline structure in a low temperature state by heating the phase at a predetermined temperature. It is preferable to employ the alloy of bringing about such a change of crystalline structure at more than $10^2$ °C/sec

to less than $10^3$ °C/sec of a cooling speed for obtaining crystalline structure in a low temperature state by means of quenching the phase in a high temperature state.

The intercrystalline phase transition alloy of the present invention is preferable to be the alloy composed of at least one kind of element selected from Ib group elements in the Periodic Table and at least one kind of element selected from IIb group, IIIb group, IVb group and Vb group elements. Of these alloys like that, it is preferable to employ the alloy composed of copper as a main component, Aℓ, Ga, In, Ge and Sn and it is more preferable to employ the alloy including Ni, Mn and Cr as the third element.

Further, it is also preferable to employ the alloy composed of copper as a main component, Aℓ, Cd and Zn and it is more preferable to employ the alloy including Cu, Aℓ and Au as the third element.

Besides, it is preferable to employ the alloy composed of gold as a main component and Aℓ.

The alloy of the present invention is preferable to be the alloy including intermetallic compound composed of said Ib group element and at least one of said IIb group IIIb group, IVb group and Vb group elements.

(A nonbulk alloy and its manufacturing method)

The intercrystalline phase transition alloy of the present invention is required to form a supercooling phase by quenching material for the purpose of making it possible to vary reflectivity. It is preferable to employ a nonbulk alloy with a small heat capacity and a high effect of abruptly-heating and quenching material in order to produce and store infromation at high speed. Namely, it is preferable to employ the nonbulk alloy having a capacity in which only the substantial desired area including the whole depth is changed to the different crystalline structure from the crystalline structure as a standard by means of energy invested on a desired minute area. Accordingly, in order to produce high density of information on a desired minute area, it is preferable to employ the nonbulk alloy with a small heat capacity such as foil, film, wire, powder or the like. In case of producing infromation on a minute area so as to have more than 20 megabit/$cm^2$ as recording density, it is better to employ 0.01 to 0.2 µm of film thickness. In general, it is difficult to mold intermetallic compound. As a result, as a method of making foil, film, wire or powder, it is effectual to have a predetermined form by quenching and solidifying material directly from the material in a gaseous phase or a liquid phase state. As these methods, there exist a PVD method (evaporation, a sputtering method, etc.), a CVD method, a melt-quenching method of rapidly rotating melt and for injecting the hot water particularly on a circumference of a metal roll constructed by a member with high thermal conductivity so as to quench and solidify it, an electroplating method, a chemical plating method and the like. In case of utilizing film material or powdery material, it is effectual to directly form it on a base or coat it on a base. In case of coating it, it is better to employ a binder causing no response by heating powder. Further, in order to prevent oxidization of material by heating and the like, it is effectual to accomplish coating on the material surface and the film or the coated layer surface formed on the base.

The foil or the wire is preferred to be formed by the melt-quenching method and also it is preferable to arrange the thickness or the diameter to be less than 0.1mm. Particularly, in order to produce the foil or the wire whose crystal grain size is less than 0.1 μm, it is preferable to arrange the thickness or the size so as be less than 0.05 mm.

The powder is preferred to be formed by an atomizing method wherein melt is sprayed to the material with a liquid coolant and then the material is put into water for quenching it. The crystal grain size is preferred to be less than 0.1 mm and particularly preferred to be less than 0.1 mm and particularly preferred to be super-minute powder whose grain size is less than 1 µm.

The film can be formed by the evaporation, the sputtering, the CVD, the electroplating, the chemical plating and the like as stated before. Particularly, for forming less than 0.1 µm of film thickness, the sputtering should be employed. The sputtering has a function of easily controlling the aiming alloy composition.

(Structure)

The intercrystalline phase transition alloy is required to have respective crystalline structures in a high temperature state or in a low temperature state and to have composition of a supercooling phase in which the crystalline structure in a high temperature state is maintained in a low temperature state. In the high temperature state, the crystalline structure is preferred to have the crystalline structure with an irregular lattice in a low temperature state, but in a supercooling phase, to have, as an example, a Cs-Cℓ type or a $DO_3$ type of regular lattice. As the alloy for greatly changing optical quality, the alloy of the present invention is preferred to be the alloy mainly composed of intermetallic compound. Particularly, it is preferable to employ the whole alloy composing intermetallic compound. This intermetallic compound is referred as to an electronic compound.  Particularly, 3/2-electronic compound (an average outer electron density e/a is 3/2) approximating to the alloy composition is excellent.

Further, the intercrystalline phase transition alloy of the present invention is preferred to have the alloy composition having solid phase transformation, for example, eutectoid transformation or peritectoid one, so as to obtain the alloy with a large differecne of spectral reflectivity by means of quenching the alloy in a high temperature state and gradually cooling it.

For the alloy of the present invention, it is preferable to employ the alloy having super-minute crystal grains, particularly the grain size is preferred to be less than 0.1 μm.  Namely, it is preferable to employ crystal grain size which is smaller than a wavelength value of visible rays, but it is all right to employ the grain size which is a wavelength of a semiconductor laser beam.

(Characteristic)

The recording material of the present invention serves to have at least two kinds of spectral reflectivity in the visible rays region at the same temperature.  It means that the spectral reflectivity of the material having crystalline structure formed by quenching it in a high temperature state is required to be different from the spectral reflectivity of the material having crystalline structure formed by gradually cooling it.

Furthermore, the difference of the spectral reflectivity between the structures by quenching and by gradually cooling the material is preferred to have more than 5%, particularly to have more than 10%. In case of making the difference of spectral reflectivity larger, it is easy to discriminate colors by eyes. Accordingly, the distinguished effect is brought about in relation to various kinds of uses as described later.

As a light source for accomplishing spectral reflection, any electromagnetic wave can be used even in case of the rays except visible rays, for example, infrared rays, ultraviolet rays and the like.

As the other characteristic of the intercrystalline phase transition alloy of the present invention, it is possible to reversibly change electric resistivity, a refractive index of light, transmissivity of light and the like as well as spectral reflectivity and thus to utilize the writing of various kinds of information and the reading of the written information.

Since the spectral reflectivity is related to the coarseness of the state of an alloy surface, in order to have at least more than 10% of spectral reflectivity difference in the visible rays region as stated before, at least the aiming part is preferred to be a mirror.

(Use)

The intercrystalline phase transition alloy of the present invention has a function of changing physical and electric characteristics such as spectral reflectivity of an electromagnetic wave, a polarization factor, electric resistivity, an retractive index, transmissivity and the like by virtue of a partial or whole change of crystal structure by heating and quenching the alloy and can be employed as a recording element of information by using changes of these characteristics.

As means for writing information, it is possible to utilize electric energy in the forms of voltage and current, an electromagnetic wave (visible rays, radiation heat, infrared rays, ultraviolet rays, proton rays, flush lamp light for photograph, an electronic beam, laser beams of an argon laser, a semiconductor laser and the like, high voltage spark discharge, etc.). Particularly, it is preferable to utilize the alloy as an optical disc of recording media by utilizing a spectral reflectivity change by the radiation thereof. As an optical disc, there exists a digital audio disc (DAD or a compact disc), a video disc, a memory disc and the like. The alloy can be utilized for these. By utilizing the alloy of the present invention for an optical disc, it can be used for a read-only type, an addition-writing type and a rewritable type of disc units and it is very effective in case of utilizing it as a rewritable type of disc unit. The writing method can employ whichever of the methods of giving energy intermittently and like a pulse or of giving it continuously. In the former method, the information can be written as a digital signal.

Since this material is a filmy alloy, the disc should be formed as follows. Namely, in Fig. 15, 100 denotes a reinforcement plate whose thickness is 1.2 to 1.5 mm and made of plastic, for which, for example, polycarbonate resin, epoxy resin, polymethyl methacrylate resin and the like are employed. 110 denotes an endoergic layer produced by evaporizing metal Bi, Cr or the like on the base so as to have some 10 nm-thickness. This layer serves to convert optical power sent from a laser beam into heat energy so as to transmit it to a color tone recording alloy layer 120. Further, if the thickness d of a first layer is arranged to be $nd = \dfrac{\lambda}{4}$ in relation to a wavelength $\lambda$ of a laser beam, this layer performs a function as a reflection-preventive film and thus conversion efficiency can be ameliorated (n denotes a refractive index). It is possible to employ semiconductor materials such as Ge, Si, SiC, etc. as the material of the layer. And it is also possible to utilize heat-resisting resin such as polyimidoamide or the like. The color tone recording alloy layer 120 is made by evaporation. A film of about 50 nm-thickness of, for example, Ag-40 weight % Zn on the first layer. The laser beam is radiated thereon from the base 100. This optical energy is converted to heat energy through the first and the second layers. However, since the surface reflectivity of the recording layer 120 is 50% and thus is large, particularly in relation to this Ag-40 weight % Zn alloy color tone recording layer, an endothermic function and a reflection-prevention function are important. The Ag-Zn recording alloy heated like that shows reflectivity shown by a curve b in Fig. 1 when it is heated up to, for example, 300°C. In the heating process from 300°C to 150°C, it shows reflectivity shown by a curve a. This is the phenomenon caused on the basis of phase transformation between body-centered cubic crystal and close packed hexagonal crystal and thus is quite stable and has excellent reproduction quality. 130 denotes a layer with several-μm-thickness made by spin-coating heat-resisting resin of polyimidoamide, which serves to mechanically protect the surface of the recording layer 120. In order to prevent heat diffusion in the horizontal direction, it is better to employ the resin with small thermal conductivity. From a view point of thermal stability, it is possible to accomplish the sputtering of alumina or glass, but it is necessary to take consideration into sufficiently thinning film thickness resisting the stress by a thermal expansion difference. In either case, in writing, since these layers are subjected to heat cycle from 300°C to a room temperature, it is necessary to accomplish the design wherein thermal expansion in each layer approximates to one another and thermal stability is heightened by thinning film thickness and the like.

By the sputtering method, the Ag-40 weight % Zn alloy film is made to form on a glass base so as to produce an optical disc. In order to prevent oxidization by heating caused in writing or erasing on the alloy film and also to prevent separation of the film from a base, a protective film made of $SiO_2$ (Thickness; 30nm) is formed by evaporation. The DC-magnetron type of sputtering method was used for the evaporizing of an alloy film on a glass base and the RF type of sputtering method was used for the formation of a $SiO_2$ film. These were provided the conditions where a sputtering output is 140 to 200 W and a base temperature is 200°C. After vacuum-exhausting a vessel down to $10^{-5}$ Torr or some, 5 to 30 m Torr of Ar-gas was introduced to produce a thin film. With regard to film thickness,

$SiO_2$-film thickness was set as about 30nm and the alloy film thickness was changed in the range of 0.05 to 10 μm. By using the optical disc produced like that, writing, erasing and their repetition were carried out. An Ar-gas laser was kept oscillated. The sample material was provided on a manually-moving stage. As removing the sample material, there was carried out the focusing of 200mW laser beam to a film surface of said material and then the laser beam was fired. The color of the part radiated by the laser beam was changed to pink. The alloy film was given heat treatment together with its base so as to be white-silver in advance. Next, after somewhat shifting a focus of the laser beam out of the film surface and lowering the laser power density, the laser beam was fired in the direction of crossing with the pink part (the vertical direction in this Figure). As a result, the original pink was erased and changed to white-silver. Simultaneously with the change of the color, concaves and convexes for writing are formed on the base surface and it was assured that the erasing serves to return the surface to the original levelizing surface.

Consequently, it has been assured that it is possible to accomplish the writing and the erasing by using a thin film-formed alloy. Further, it has been assured that this writing and erasing can be accomplished again and again.

According to this alloy material:

(1) It is possible to produce a writing and erasing type of optical disc by using the harmless material of Ag-Zn alloy.

(2) By multilayered film composition of the present structure, it is possible to attempt effective utilization of writing power and reduction of a writing temperature.

(3) It is economical, because it employs as material plastic which is cheaper than glass or the like and it is possible to employ as a film-forming process the process which realizes a mass production.

Furthermore, the disc shown in Fig. 15 can be arranged as follows. In Fig. 15, 100 denotes a reinforcement plate whose thickness is 1.2 to 1.5 mm and made of plastic, for which, for example, polycarbonate resin, epoxy resin, polymethyl methacrylate resin and the like can be employed. 110 denotes an endoergic layer produced by evaporizing metal Bi, Cr or the like on the base so as to have some 10nm-thickness. This layer serves to convert optical energy sent from a laser beam into heat energy so as to transmit it to a color tone recording alloy layer 120. Further, if the thickness d of a first layer is arranged to be $nd=\lambda/4$ in relation to a wavelength $\lambda$ of a laser beam, this layer performs a function as a reflection-preventive film and thus conversion efficiency can be ameliorated (n denotes a refractive index). It is possible to employ semiconductor materials such as Ge, Si, SiC, etc. as the material of the layer. And it is also possible to utilize heat-resisting resin such as polyimidoamide or the like. The color tone recording alloy layer 120 is made by evaporation. A film of about 50 nm-thickness of, for example, Ag-40 weight % Zn on the first layer. The laser beam is radiated thereon from the base 110. This optical energy is converted to heat energy through the first and the second layers. However, since the surface reflectivity of the recording layer 120 is 50% and thus is large, particularly in relation to this Ag-40 weight % Zn alloy color tone recording layer, an endothermic function and a reflection-prevention function are important. The Ag-Zn recording alloy heated like that shows reflectivity shown by a curve b in Fig. 1 when it is heated up to, for example, 300°C. In the heating process from 300°C to 150°C, it shows reflectivity shown by a curve a. This is the phenomenon caused on the basis of phase transformation between body-centered cubic crystal and close packed hexagonal crystal and thus is quite stable and has excellent reproduction quality. 130 denotes a layer with several µm-thickness made by spin-coating heat-resisting resin of polyimidoamide, which serves to mechanically protect the surface of the recording layer 120. In order to prevent heat diffusion in the horizontal direction, it is better to employ the resin with small thermal conductivity. From a view point of thermal stability, it is possible to accomplish the sputtering of alumina or glass, but it is necessary to take consideration into sufficiently thinning film thickness resisting the stress by the stress by a thermal expansion difference. In either case, in writing, since these layers are subjected to heat cycle from 300°C to a room temperature, it is necessary to accomplish the design wherein thermal expansion in each layer approximates to one another and thermal stability is heightened by thinning film thickness and the like.

According to this embodiment;

(1) It is possible to produce a writing and erasing type of optical disc by using the harmless material of Ag-Zn alloy.

(2) By multilayered film composition of the present structure, it is possible to attempt effective utilization of writing power and reduction of a writing temperature.

(3) It employs as material plastic which is cheaper than glass or the like and it is possible to employ a film-forming process the process which realizes a mass production.

Further, Fig.16 shows a structure example of a recording carrier 40 for realizing double storage by using the recording medium shown above. As shown in Fig.16, the recording carrier 40 has multilayered structure including a first recording medium 220 on transparent glass or at least one surface of an alloy-resin-made base 210 and a second medium 230 on the surface of the first recording medium 220. In accordance with an object of using it, a protective film 240 should be provided on one surface of the second recording medium 230. The structure described above is the most simplified example. In order to put it into practical use, it goes without saying that there are provided a reflection-preventive film for ameliorating efficiency during radiation of energy, an endothermic film, a stress-relaxing film for relaxing stress and a distortion of recording films 220 and 230 and the like in addition to the above-stated layers.

Further, in this Figure, an example of one side is shown ,but it is possible to easily provide this structure on both surfaces.

Hereinafter, the principle of writing and erasing information is described in relation to the recording carrier including at least two recording layers.

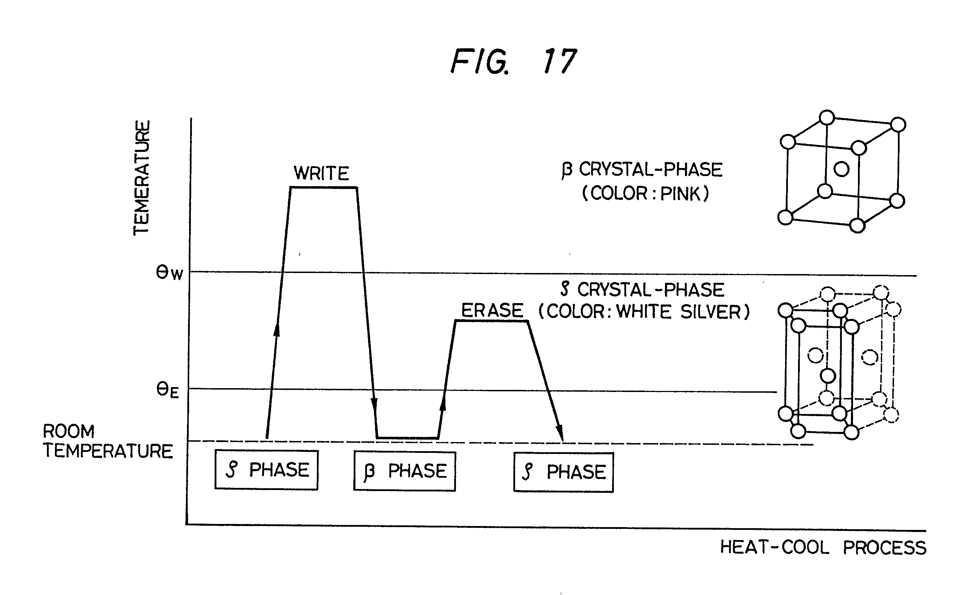

In general, the recording layer accompanying a reversible phase change has two transformation temperatures $\theta_w$ and $\theta_z$. Namely, Fig. 17 explaines it as an example of an Ag-Zn alloy, but in case the temperature of the Ag-Zn alloy is raised up to more than the transformation temperature $\theta_w = 280 - 300°C$, the alloy is made to have body-centered cubic crystal is maintained at the temperature between the transformation temperature $\theta_z = 100 - 150°C$ and $\theta_w = 280 - 300°C$, the alloy is changed to have closest packed hexagonal structure crystal. Thus, it is possible to record or erase information by utilizing the transition between two types of crystals. Hereinabove, the description has been developed in relation to the example of one-layered recording layer, but, in case this principle is adapted for the case of recording layer with more than two layers, the following principle will be provided. $\theta_{1w}$ and $\theta_{1z}$ denote a transformation temperature of the first recording medium. $\theta_{2w}$ and $\theta_{2z}$ denote a transformation temperature of the second recording medium. As the relation of temperatures, there are considered these six case; (1) $\theta_{2w} > \theta_{2z} > \theta_{1w} > \theta_{1z}$, (2) $\theta_{2w} > \theta_{1w} > \theta_{2z} > \theta_{1z}$, (3) $\theta_{2w} > \theta_{1w} > \theta_{1z} > \theta_{2z}$, (4) $\theta_{1w} > \theta_{1z} > \theta_{2w} > \theta_{2z}$, (5) $\theta_{1w} > \theta_{2w} > \theta_{1z} > \theta_{2z}$, and (6) $\theta_{1w} > \theta_{2w} > \theta_{2z} > \theta_{1z}$. From a view point of recording information, all the ideas are same with one another. Thus, herein, the description is provided as taking an example of (1). Further, with respect to (1) and (4), (2) and (5) and (3) and (6), the basical ideas are same with each other only if the first recording medium transformation temperature is replaced with the second one.

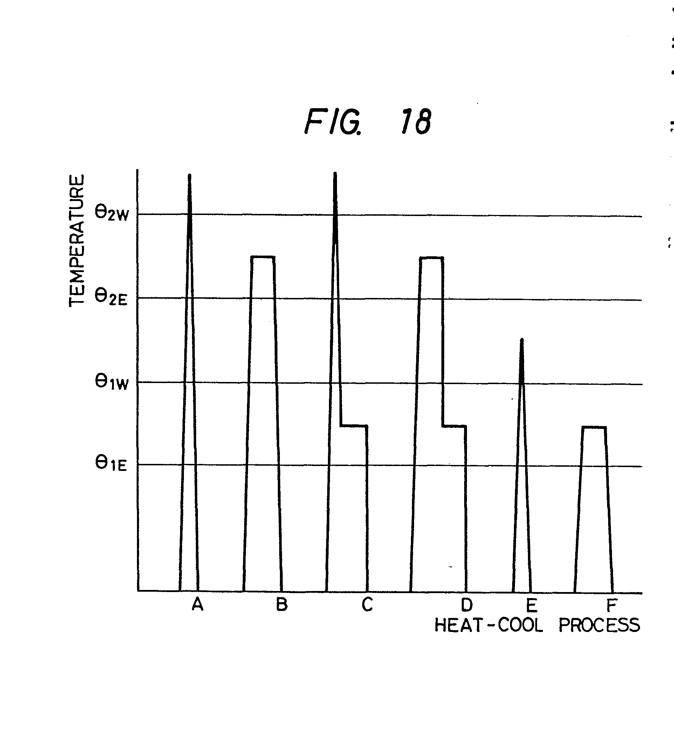

Fig. 18 shows a heating and cooling process for changing the states of the first and the second recording layers in case of (1). 1a denotes the state at the time of heating and quenching the first recording layer. 1b denotes the state at the time of heating and gradually cooling it. 2a denotes the state at the time of heating and quenching the second recording layer. 2b denotes the state at the time of heating and gradually cooling it. In this case, the states of the two recording films can be grouped in the following four states;

$$A : \begin{pmatrix} 1a \\ 2a \end{pmatrix}$$

$$B : \begin{pmatrix} 1a \\ 2b \end{pmatrix}$$

$$C : \begin{pmatrix} 1b \\ 2a \end{pmatrix}$$

$$D : \begin{pmatrix} 1b \\ 2b \end{pmatrix}$$

The fundamental states can be shown by the above-stated four states, but in some heating and cooling methods, there exist the states E and F. Namely, it means the case that only the content of the first recording layer is made changed without changing the content of the second recording layer.

$$E: \begin{pmatrix} 1a \\ * \end{pmatrix} \quad *: \text{no change of the content}$$

$$F: \begin{pmatrix} 1b \\ * \end{pmatrix}$$

Fig. 18 shows the method of producing the A to F states, which are shown as follows;

A: Under the state of raising the temperatures of the recording layers up to more than $\theta_{2w}$ and then quenching them, the recording layer states are made to be 1a and 2a.

B: Under the state of maintaining the temperatures of the recording layers between $\theta_{2w}$ and $\theta_{2z}$ and then quenching them, the first recording layer and the second recording layer states are respectively made to be 1a and 2b.

C: Under the state of raising the temperatures of the recording layers up to more than $\theta_{2w}$, quenching them and again maintaining them between $\theta_{1w}$ and $\theta_{1z}$, the first recording layer and the second recording layer states are respectively made to be 1b and 2a.

D: Under the state of maintaining the temperatures of the recording layers between $\theta_{2w}$ and $\theta_{2z}$ and

and then maintaining them between $\theta_{1w}$ and $\theta_{1z}$, the first and the second recording layer states are respectively made to be 1b and 2b.

E: Under the state of raising the temperatures of the recording layers between $\theta_{2w}$ and $\theta_{1w}$ and then quenching them, the first recording layer state is made to be 1a, but the second recording layer state stays.

F: Under the state of maintaining the temperatures of the recording layers between $\theta_{1w}$ and $\theta_{1z}$, the first recording layer state is made to be 1b but the second state stays.

As recording media for bringing about these states, it is possible to utilize an intercrystalline phase transition alloy or a not-crystalline semiconductor in which the erasing temperature $\theta_{2w}$ of the second recording layer is larger than the writing temperature $\theta_{1w}$ of the first recording layer. For example, by selecting an Ag-Zn alloy ($\theta_{1w} \fallingdotseq 300°C$, $\theta_{1z} \fallingdotseq 150°C$) as a first recording layer and a Cu-In-Aℓ alloy ($\theta_{2w} \fallingdotseq 150°C$, $\theta_{2z} \fallingdotseq 510°C$), these states can be realized.

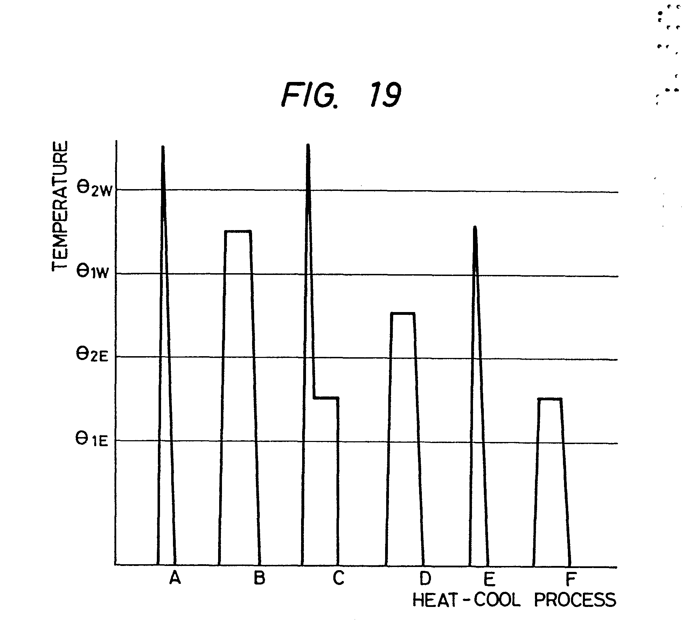

Further, Fig. 19 shows a heating and cooling method in case of $\theta_{1w} > \theta_{2z}$. In this case, the above-mentioned A to F states can be brought about. However, in this case, since there exists the relation of $\theta_{1w} > \theta_{2z}$, in case of selecting Ag-Zn for a first recording layer, for a second recording layer, the medium having the relation of $\theta_{2z} < \theta_{1w} \fallingdotseq 300°C$ such as an Ag-A$\ell$-Cu alloy ( $\theta_{2w} = 550°C$, $\theta_{2z} = 220°C$) should be utilized.

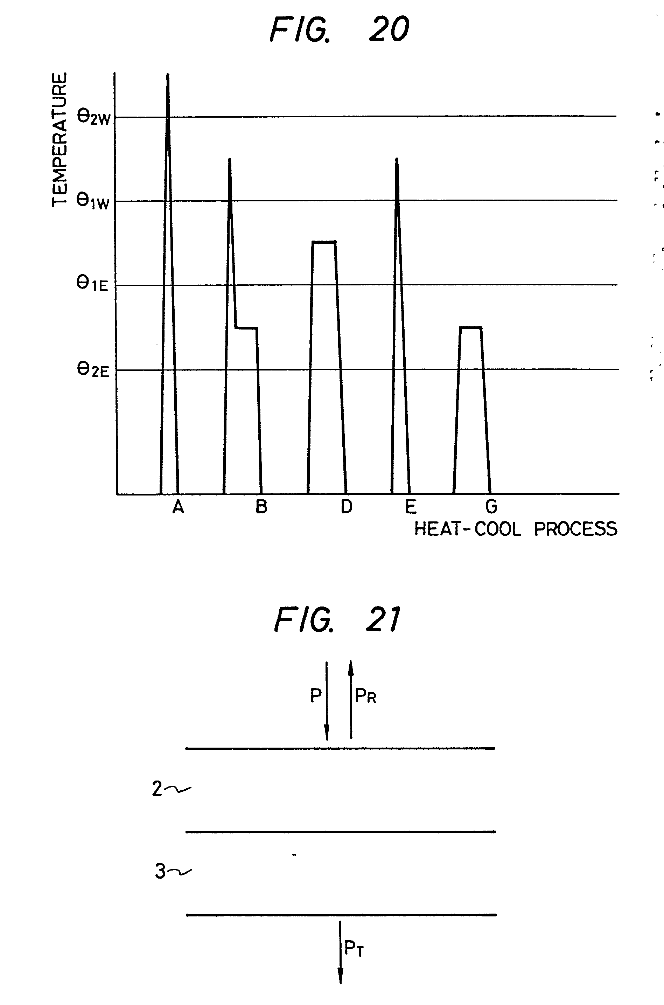

Moreover, Fig. 20 shows the case of $\theta_{2w} > \theta_{1w} > \theta_{1z} > \theta_{2z}$. The different respect from said case is that it is impossible to produce the C and F states and it is possible to produce a G state, that is, the state of bringing only the content of a second recording layer to 2b. In this case, for example, in case of using an Ag-Zn alloy for a first recording layer, the Au-A$\ell$ alloy ( $\theta_{2w} \fallingdotseq 535°C$, $\theta_{2z} \fallingdotseq 125°C$) should be selected for a second recording layer.

As stated above, there has been described the example of utilizing an Ag-Zn alloy for a first recording layer, it is possible to select another alloy or non crystalline semiconductor material. For example, by selecting a mixture of Sn and Ge whose main component is $TeO_x$ ( $\theta_{1w} \fallingdotseq 280°C$, $\theta_{1z} \fallingdotseq 120°C$) for a first recording layer and also an alloy having the relation of $\theta_{2z} > \theta_{1w}$ such as said Cu-In-A$\ell$ or Cu-A$\ell$-Ni ( $\theta_{2w} \fallingdotseq 725°C$, $\theta_{2z} = 350°C$) or the like for a second recording layer, it is possible to produce the A to F states shown in Fig. 18. As a fundamental idea, the recording media which have different phase changes and intercrystalline phase transition temperatures from each other should be employed for each layers.

Next, the reproducing method of the signal recorded by the above is described. The reflectivity of each recording medium is shown by Ri (i=1,2: the number of a recording layer). The transmittivity thereof is shown by Ti(i = 1, 2). As shown in Fig. 21, in case the beam of intensity P is radiated to the recording medium, the intensities $P_R$ and $P_T$ of the reflected beam and the transmitted beam are expressed by the following formulas;

$$P_R = P \{R_1 + (1 - R_1) T_1^2 R_2\} \qquad \ldots\ldots (1)$$

$$P_T = P (1 - R_1) T_1 (1 - R_2) T_2 \qquad \ldots\ldots (2)$$

These $P_R$ and $P_T$ have four values in accordance with the states of respective recording layers. It is possible to reproduce the written signal on the basis of this difference.

C L A I M S:

1.    An information-recording and reproducing device comprising a laser light source (12, 14), a laser-driving circuit (100) for driving said laser light source and an optical system (200, 22, 24) for converging the laser beam on an optical recording medium surface (1), said information-recording and reproducing device characterized by providing means (90) for detecting a driving demand (94) for recording given to said laser-driving circuit (100) and a reflected beam level (204, 206) by a laser beam for reproducing supplied to a recording medium recorded by said driving demand for recording of said laser-driving circuit (100) in accordance with said detected level.

2.    An information-recording and reproducing device comprising a laser light source, a laser-driving circuit (100) for driving said laser light source and an optical system (200) for converging the laser beam on an optical recording medium surface, said information-recording and reproducing device characterized by providing means for detecting a driving demand for erasing given to said laser-driving circuit (100) and a reflected beam level (206) by a laser beam for reproducing supplied to a recording medium recorded by said driving demand for erasing of said laser-driving circuit in accordance with said detected level.

3.    An information-recording and reproducing device comprising a laser light source (12, 14), a laser-driving circuit (100) for driving said laser light  source and an optical system (200, 22, 24) for converging the laser beam on an optical recording medium surface (1), said information-recording and reproducing device characterized by providing means (90) for detecting a driving demand for reproducing given to said laser-driving circuit (100) and a reflected beam level (204, 206) by a laser beam for reproducing supplied to a recording medium recorded by said driving demand for reproducing of said laser-driving circuit in accordance with said detected level.

4.    An information-recording and reproducing device comprising a laser light source, a laser-driving circuit (100) for driving said laser light source and an optical system for converging the laser beam on an optical recording medium surface, said information-recording and reproducing device characterized by providing means for detecting a level of a reflected beam by a laser beam as a standard for reproducing to be supplied to a recording medium, comparing said detected level with a standard level and, when the detected level is not within a standard level, generating an inferiority signal informing inferiority of the recorded content.

5. An information-recording and reproducing device comprising a laser light source, a laser-driving circuit for driving said laser light source and an optical system for converging the laser beam on an optical recording medium surface, said information-recording and reproducing device characterized by providing characteristic-compensating means (120) for detecting a level of a beam reflected by a recorded recording medium and changing transmission functions of servo circuits in automatic focusing control means and tracking control means in accordance with the detected level.

6. The information-recording and reproducing device according to any of the claims 1 to 5, characterized in that the optical recording medium is an optical recording alloy using a reflectivity change by intercrystalline phase transition.

7. An information-recording and reproducing device according to any of the claims 1 to 5, characterized in that said recording medium is composed of metal or an alloy including at least two kinds of crystalline structures in a solid state, maintaining the crystalline structure in one temperature area in the other temperature area and/or bringing about respective bulk changes in the crystalline state.

8. An information-recording and reproducing device comprising a laser light source, a laser-driving circuit for driving said laser light source and an optical for converging the laser beam on an optical recording medium surface, said information-recording and reproducing device characterized by providing means for detecting a level of a reflected beam by a laser beam for reproducing given to the recorded recording medium and setting a level of a driving demand for reproducing in the laser driving circuit so as to make a ratio of a signal to nozzle at said detected level go over a certain value, said recording medium being composed of metal or an alloy including at least kinds of crystalline structures in a solid state, maintaining the crystalline structure in one temperature in the other temperature area and/or bringing about respective bulk changes in the crystalline state.

FIG. 1

FIG. 2

0184188

## FIG. 3

LASER POWER $P_L$ (mW)

DRIVING CURRENT OF LASER $I_f$ (mA)

MODULATION CURRENT

## FIG. 4
## PRIOR ART

200

## FIG. 5

## FIG. 6

## FIG. 7

## FIG. 8

## FIG. 9

## FIG. 10

# FIG. 11

0184188

# FIG. 12

LASER DRIVING DEMAND — 90

MEMORY — 80

STANDARD VALUE

92

94

LASER DRIVER — 100

LASER — 14

102

141, LASER BEAM

152

110
112
MODE SELEC-TION

112

120

130

LASER POWER ADJUST

OPTICAL STRENGTH COMPEN-SATE

OPTICAL SYSTEM (FIG. 4) — 200

206

122

204, REFLECTION

202 INJECTION

DISC

160
INDICATOR

130
READING

140
SERVO FOR FOCUSING ETC

8/13

0184188

## FIG. 13

## FIG. 14

## FIG. 15

- 130
- 120
- 110
- 100

## FIG. 16

40

- 210
- 220
- 230
- 240

## FIG. 17

β CRYSTAL-PHASE
(COLOR: PINK)

$\delta$ CRYSTAL-PHASE
(COLOR: WHITE SILVER)

WRITE

ERASE

TEMERATURE

$\Theta_W$

$\Theta_E$

ROOM
TEMPERATURE

$\delta$ PHASE | β PHASE | $\delta$ PHASE

HEAT-COOL PROCESS

## FIG. 18

HEAT-COOL PROCESS

FIG. 19

HEAT-COOL PROCESS

## FIG. 20

## FIG. 21